# EUROPEAN PATENT APPLICATION

(11) **EP 1 612 243 A1**
(43) Date of publication of application: **04.01.2006**
(21) Application number: 04103061.0
(22) Date of filing: 30.06.2004
(51) Int. Cl.: C08L 95/00, C08L 53/02

(54) **Bituminous roofing composition**

(71) Applicant: KRATON Polymers Research B.V., 1030 BH Amsterdam (NL)
(72) Inventor: Trommelen, Erik A.T., 1030 BH Amsterdam (NL); Bodt, Duco, 1031 CM Amsterdam (NL); Vonk, Willem C., 1031 CM Amsterdam (NL); Van Dijk, Cornelis Martinus, 1031 CM AMSTERDAM (NL)
(74) Representative: Kortekaas, Marcel C.J.A.

(57) **Abstract**

The present invention provides a bituminous roofing composition which comprises from 2 to 20 percent by weight, based on block copolymer plus bitumen, of a styrenic block copolymer composition, the balance being a bituminous material, wherein the styrenic block copolymer composition comprises:
a. from 5 to 70% by weight of a first block copolymer selected from linear styrenic block copolymers (SBC1), radial styrenic block copolymers (SBC2) and mixtures thereof, wherein:
   i. said linear block copolymer comprises at least two polymer blocks each substantially made of an aromatic vinyl compound and at least one polymer block substantially made of a conjugated diene compound and having an apparent molecular weight greater than 250,000 and;
   ii. said radial styrenic block copolymer has three or more polymer arms attached to the residue of a cross-linking agent or multifunctional compound, and comprises at least two polymer blocks each substantially made of an aromatic vinyl compound and at least one polymer block substantially made of a conjugated diene compound and wherein the polymer arms have an average apparent molecular weight greater than 125,000 and
b. from 95 to 30% by weight of an elastomer (EI) having an apparent molecular weight of 120,000 to 250,000.

The present invention also comprises a easy welding roll roofing membrane which comprises a reinforcing mat and the above described bituminous composition which saturates and/or coats the reinforcing mat.

## Description

### Background Art

Asphalt is a common material utilized for the preparation of roofing membranes and coatings which may be applied as mopping grade asphalts, cutbacks in solvents, single ply membranes, shingles, roll roofing membranes, etc. While the material is suitable in many respects, it inherently is deficient in some physical properties which it would be highly desirable to improve. Efforts have been made in this direction by addition of certain conjugated diene rubbers, neoprene, resins, fillers and other materials for the modification of one or more of the physical properties of the asphalt binder. Each of these added materials modifies the asphalt in one respect or another but improvements to balance product performance are certainly desired. For example, some of them have excellent weather resistance, sealing and bonding properties but are often deficient with respect to warm tack, modulus, hardness and other physical properties.

Since the late 1960s, styrene-butadiene rubber and styrene-rubber block copolymers such as styrene-butadiene-styrene and styrene-isoprene-styrene block copolymers have been used to dramatically improve the thermal and mechanical properties of asphalts. Practical application of the rubber addition approach requires that the blended product retain improved properties and homogeneity during transportation, storage and processing. Long term performance of elastomer-modified asphalts also depends on the ability of the blend to maintain thermal and chemical stability.

To be suitable for synthetic roofing materials, the asphalt-block copolymer mixtures should meet the following requirements:
(a) sufficient resistance to flow at high temperatures,
(b) sufficient flexibility at low temperatures,
(c) workability according the convention methods used in the roofing technique,
(d) adequate hot storage stability,
(e) adequate hardness to prevent deformation during working traffic on the roof, and
(f) if it is to be used as an adhesive, sufficient tack and adhesive strength.

For roll roofing applications, it is preferred that the DIN flow resistance (the temperature at which the material will tend to flow) be above about 90 degree Centigrade, and that the cold bend temperature (the temperature at which the material will crack during application and service), should be below about -5 degree Centigrade. This temperature range is commonly referred to as the service temperature range. Wide service temperature ranges are desirable.

In addition the asphalt and block copolymer components should be able to be mixed and processed at a temperature preferably about 180 degree Centigrade to keep the asphalt heating costs down and to prevent possible adverse effects on the compound caused by too long storage at too high a temperature. Hot storage stability of the mix is indispensable for optimal processing flexibility (e.g., the hot mix should not degrade over weekend, resulting in inferior Monday morning material).

For roll roofing membranes, the bituminous composition is used to saturate and/or coat a reinforcing mat. The bitumen is there to make the membrane waterproof. The mat is used to aid in mechanical properties (gives the membrane strength, etc.) and for dimensional stability. Polymer is added to the asphalt to improve the weatherability, durability, rheological and mechanical properties of the asphalt.

Resistance to degradation under the application of heat at roof top temperatures is an important consideration in materials for roll roofing membranes. Roll roofing membranes are used, for example, to protect the surface of a roof. The membrane is rolled up and when applied, is merely unrolled in place on the roof. One application method to secure the membrane to the roof is torching, i.e. heating with a flame at a high temperature, while only melting the surface for proper welding. High performance roll roofing membranes which comprise a reinforcing mat coated with block copolymer modified asphalt must use a bituminous composition which flows sufficiently at these temperatures to ensure good application to the roof and watertight seam.

Thus, it can be seen that it would be highly advantageous to be able to produce a bitumen/polymer blend for roll roofing which has a wide service temperature range, which has improved hot storage stability and improved resistance to gelation and that can be applied using relatively inexpensive equipment (due to low viscosity, i.e., easy welding characteristics and good flow characteristics) but which is also elastic. The present invention provides such a composition.

### Disclosure of Invention"

The present invention provides a bituminous roofing composition which comprises from 2 to 20 percent by weight, based on block copolymer plus bitumen, of a styrenic block copolymer composition, the balance being a bituminous material, wherein the styrenic block copolymer composition comprises:
a. from 5 to 70% by weight of a first block copolymer selected from linear styrenic block copolymers (SBC1), radial styrenic block copolymers (SBC2) and mixtures thereof, wherein:
   i. said linear block copolymer comprises at least two polymer blocks each substantially made of an aromatic vinyl compound and at least one polymer block substantially made of a conjugated diene compound and having an apparent molecular weight greater than 250,000 and;
   ii. said radial styrenic block copolymer has three or more polymer arms attached to the residue of a cross-linking agent or multifunctional compound, and comprises at least two polymer blocks each substantially made of an aromatic vinyl compound and at least one polymer block substantially made of a conjugated diene compound and wherein the polymer arms have an average apparent molecular weight greater than 125,000 and
b. from 95 to 30% by weight of an elastomer (EI) having an apparent molecular weight of 120,000 to 250,000.

The composition may contain from 0 to 65 percent by weight of filler based on the total composition. The present invention also comprises an easy welding roll roofing membrane which comprises a reinforcing mat and the above described bituminous composition which saturates and/or coats the reinforcing mat.

### Mode(s) for Carrying Out the Invention

The basic part or framework of a roll roofing membrane is the reinforcing mat. The reinforcing mat is made of a material which is capable of being saturated and/or coated with bituminous compositions which can be polymer modified asphalt or some other material such as unmodified asphalt. Such materials include fibrous materials including glass and polyester fibres. The roll roofing membrane may or may not be topped with granules. In order to make the roll roofing membrane of the present invention, a reinforcing mat is saturated with said compound or a layer of the bituminous composition is coated onto at least one surface of the membrane to form a protective layer. It may or may not saturate the membrane. This is generally the surface which will be exposed to the heat when the roll roofing membrane is welded (e.g., torched) as it is applied on the surface of a roof. A plastic cover sheet may be placed over the top of the layer to prevent the membrane from adhering to itself. The plastic sheet generally burns off during torching or hot air welding. This sheet may be perforated in order to allow bitumen on the roof to bond with bitumen on or in the membrane if the roll roofing membrane is attached to the roof by means other than torching, e.g., by mopping asphalt or solvent-based asphalt cut back adhesive.

The bituminous roofing composition of the present invention, while it is described herein in terms of its use with a roll roofing membrane, may also be used to advantage as a mopping bitumen composition. A mopping bitumen composition is one which is applied to the surface of a roof by mopping or other similar means. The composition of the present invention may also be used as a cold applied adhesive. Cold applied adhesives are used in repair work and in cases in which it is dangerous or not allowed to use an open flame.

The bituminous component in the bituminous block copolymer compositions according to the present invention may be naturally occurring bitumen or derived from a mineral oil. Also petroleum derivatives obtained by a cracking process and cold tar can be used as the bituminous component as well as blends of various bituminous materials.

Examples of suitable components include distillation or "straight-run bitumens," precipitation bitumens, e.g. propane bitumens, blown bitumens and mixtures thereof. Other suitable bituminous components include mixtures of one or more of these bitumens with extenders such as petroleum extracts, e.g. aromatic extracts, distillates or residues. Suitable bituminous components (either "straight-run bitumens" or "fluxed bitumens) include those having a penetration of less than about 300 (decimillimeters) at 25 degrees Centigrade. This limitation excludes many of the softer bituminous components such as pure fluxes and pure aromatic extracts which are too soft for this application. In addition, their use requires high levels of high molecular weight block copolymer to meet softening point requirements, which makes it more difficult to torch. However, softer asphalts can be used when filler is used because the filler improves the stiffness of the composition and reduces the tack especially at lower temperatures.

The amount of block copolymer component used in the compositions for saturating and/or coating the reinforcing mat may range from 2 to 20 percent by weight, preferably from 5 to 15, more preferably from 8 to 14 percent, based on block copolymer and bitumen. Note that the amount that is used may be less than what is generally recommended for commercial block copolymer components used in the art, which is a further advantage.

In general block copolymer components of compositions used to saturate and/or coat the reinforcing mat are block copolymers of a vinyl aromatic hydrocarbon such as styrene and a conjugated diene such as butadiene or isoprene. Such elastomeric block copolymers can have general formulas A-B-A or (AB)ₙ X wherein each A block is a vinyl aromatic hydrocarbon polymer block, each B block is a conjugated diene polymer block, X is a coupling agent, and n is an integer from 2 to 30. Such block copolymers can be linear or may have a radial or star configuration as well as being tapered. Block copolymers such as these are well known and are described together with their use in bituminous compositions in many patents including US 3265765 ; US 4405680 ; US 4405680 ; US 4405680 ; US 4405680 ; US 5719216 ; US 5854335 ; US 6133350 ; US 6120913 ; and US 2004048979 . These patents are herein incorporated by reference.

In EP Patent Application Serial Number 04101527.2 filed on April 14, 2004, a novel polymer composition is disclosed that found particular utility as an asphalt binder for road application. This resulted in a reduction in drain-down, while maintaining processability at all stages of blending, mixing, laying and compaction, using standard available equipment. This novel polymer composition comprises 5 to 70 % by weight of a linear and/or radial styrene/diene block copolymer having a relatively high molecular weight, and 95 to 30% by weight of an elastomer component, preferably a styrene/diene diblock copolymer having lower molecular weight. Methods for making such polymers are described in detail in the above-mentioned patent application.

What has now been found is that this novel polymer composition provides surprising advantages when used in a bituminous roofing composition.

The EP04101527.2 application is herein incorporated by reference. The description of the type of polymers, the method of manufacturing the polymers and the method of hydrogenation of the polymers is described therein and is applicable to the production of block copolymers containing other vinyl aromatic hydrocarbons such as alpha methyl styrene and other conjugated dienes or mixtures of conjugated dienes.

The key component of the present invention is the novel block copolymer composition. The novel block copolymer composition comprises a high molecular weight styrenic block copolymer combined with a low molecular weight elastomer. Preferably, the styrenic block copolymer has a molecular weight in the range of 250,000 to 800,000 if said copolymer is a linear polymer, or in the range of 500,000 to 1,500,000 if said copolymer is a branched or star-shaped polymer. Most preferably the styrenic block copolymer constituents are selected from the group consisting of

A-B-A-(B)ₚ or (A-B)₂X

wherein A represents the polymer block substantially made of an aromatic vinyl compound, typically a polystyrene block; B a represents the polymer block substantially made of a conjugated diene, typically a polybutadiene block, p is 0 or 1 and X is the residue of a coupling agent.

These preferred styrenic block copolymer constituents are selected from a larger group of styrenic block copolymers, that all may be used in the compositions of the present invention, consisting of those of the formulae

(B)ₚ(A-B)₂X; or (B)ₚ-A(B-A)ₙ-(B)ₚ, (linear SBC1)

((B)ₚ(A-B)ₙ)ₘX (radiacl SBC2)

wherein A, B, p and X have the meaning set out above, n is an integer greater than or equal to 1, and m is an integer greater than 2.

The expression "substantially" as used herein means that sufficient vinyl aromatic compound is used, for instance at least 50% by weight, to provide a hard block A having a glass transition temperature of greater than 25°C, whereas in terms of the block B the expression "substantially" means that sufficient conjugated diene is used, for instance at least 70% by weight, to provide an elastomer block having a glass transition temperature below 25°C.

The content of the vinyl aromatic compound in the styrenic block copolymer is from 10 to 50% by weight, preferably from 15 to 40% by weight.

The vinyl aromatic compound may be selected from compounds having 8 to 18 carbon atoms per molecule. For instance, some representative examples thereof include: styrene; 1-vinylnaphthalene; 3-methylstyrene; 3,5-diethylstyrene; 4-propylstyrene; 2,4,6-trimethylstyrene; 4-dodecylstyrene; 3-methyl,5-n-hexylstyrene; 4-phenylstyrene; 2-ethyl,4-benzylstyrene; 2,3,4,5-tetraethylstyrene; 3-ethyl-1-vinylnaphthalene; alpha-methylstyrene, and the like. Preferred examples comprise 3-methylstyrene, styrene and mixtures thereof, styrene being most preferred. Compounds that may be copolymerized and form part of the A block(s) may be selected from the conjugated dienes hereafter, and other anionically polymerizable, vinyl monomers, such as vinylcyclohexane, t-butyl- methacrylate and the like. Most preferably each polymer block A is a polystyrene block.

Block B is preferably made from butadiene, isoprene or mixtures thereof. Conjugated dienes that can be used, preferably having from 4 to 12 carbon atoms per molecule, further include 2,3-dimethyl-1,3-butadiene, piperylene, 3-butyl-1,3-octadiene, phenyl-1,3-butadiene, and the like. Said block(s) may also comprise other monomers, such as the vinyl aromatic compounds mentioned herein above. Most preferably block B is a polybutadiene block.

As is known, butadiene (and other conjugated dienes) may polymerize in 1,4-addition manner and/or 1,2-addition manner. The latter results in pending vinyl groups. It is known in the art to use styrenic block copolymers having relatively high vinyl content, e.g. up to 70% and higher (based on the conjugated diene), e.g. by polymerizing the conjugated diene monomer in the presence of a polar cosolvent and/or at a relatively cool polymerization temperature. In producing the polymer block (B) under ordinary conditions a vinyl content of less than 25% is obtained. Both high vinyl and ordinary styrenic block copolymers may be used.

Styrenic block copolymer and elastomer may be used in relative amounts of 5 to 70% by weight (SBC1 and/or SBC2) and 95 to 30% by weight (EI), respectively, but preferably in relative amounts 10 to 50% by weight (SBC1 and/or SBC2) and 90 to 50% by weight (EI). Most preferably, the relative amounts are selected within the aforementioned range on the basis of some scouting experiments, to compensate for the effect of the molecular weights of these components and the effect of the blend.

Depending on their method of preparation these SBC's are known to comprise diblock copolymers of formula A-B in various amounts. Indeed, in coupling reactions, the diblock copolymers of formula A-B have the same molecular weight of the arms in the coupled polymer. The co-produced diblock copolymer of formula A-B may be the low molecular weight elastomer (EI) component of the polymer composition, provided it has a molecular weight in the range of from 10,000 to 250,000 and is present in an amount in the range of 85 to 30% by weight basis the polymer composition. This is the preferred embodiment. On the other hand, elastomer (EI) may be a separate elastomer, selected from the elastomers mentioned herein before. Elastomer (EI) may also be a diblock copolymer produced independent of the preparation of the styrenic block copolymer (A) (SBC1 or SBC2).

The polymer composition that has been found to be most suitable for the present application is a high mol weight styrene-butadiene-styrene coupled block copolymer with a large amount of diblock, with the following characteristics:
1. styrene content in the range of 25-40%, preferably about 30% by weight;
2. diblock molecular weight 180,000-215,000, preferably about 200,000;
3. diblock content 70-85%, preferably 80% by weight (which corresponds with a coupling efficiency of 15-25, preferably 20%); and
4. having a linear structure (manufactured with a difunctional coupling agent),
having an apparent molecular weight (SBS) of 30,000-40,000//300,000-350,000//30,000-40,000, preferably 36000 - 328000 - 36000.

With the term "apparent molecular weight", as used throughout the present specification, is meant the molecular weight, as measured by means of Gel Permeation Chromatography (GPC), relative to commercially available poly(styrene) calibration standards (according to ASTM D6474-99). One skilled in the art can readily convert "apparent" molecular weight to "real" or "true" molecular weight according to known compositionally dependent conversions. For example, a styrene/butadiene block copolymer having the structure (S-B)₂ X with apparent molecular weight of (36,000 - 164,000)₂ X and 30% weight bound styrene will have a real molecular weight of about (36,000 - 84,000)₂ X (depending on the vinyl content of the butadiene block).

The compositions of the present invention may contain other materials such as fillers including calcium carbonate, limestone, chalk, ground rubber tires, etc. If other materials are added, the relative amounts of the bitumen and polymer specified above remain the same. The filler is generally used in an amount from 0 to 65 percent by weight based on the total composition. The filler is used to harden or stiffen the composition and to decrease its cost. Preferably, the amount of filler to be used in the composition of the present invention is from 1 to 50 percent by weight because it is easier to process and the membrane rolls are not too heavy.

It is also known in the art to use cross-linking agents or "compatibilizers" such as sulphur and the like. Cross-linking agents for asphalt applications are also well known in the art. As examples, US 5017230 , US 5756565 , US 5795929 and US 5605946 disclose various cross-linking compositions and refer to other patents that disclose cross-linking compositions. For various reasons including costs, environmental impact, and ease of use, elemental sulphur with inorganic zinc compounds are preferred. Most cross-linking formulations use elemental sulphur due to cost. In special situations, the sulphur can be added with a sulphur donor such as dithiodimorpholine, zinc thiuram disulfide, or any compound with two or more sulphur atoms bonded together. The zinc is added as zinc 2-mercaptobenzothiazole, zinc tetraalkylthiuram disulfide, zinc oxide, zinc dialkyl-2-benzosulfenamide, or other suitable zinc compound or mixtures thereof. The present invention is particularly useful in the addition of normally solid or non-liquid cross-linking agents. These cross-linking agents are normally sold in powder or flake form. The quantity of elemental sulphur which may be employed in the invention, may vary from 0.05 to 0.2 wt %, preferably from 0.1 to 0.15 wt %, based on the total amount of bituminous composition prior to filing with(mineral) filler. A corresponding quantity of an alternative cross-linking agent may be used.

The bituminous composition of the invention may also contain one or more tackifying resins in an amount of from 0 to 25 weight percent of the total bituminous composition (again, prior to filling with filler). Higher quantities can be used but to the detriment of some properties. The role of tackifying resins is well known in the sector of adhesives. The tackifying resins are well known conventionally and are more particularly described in **US 4738884** , which is incorporated herein by reference in its entirety.

The bituminous block copolymer compositions of the present invention may be prepared by various methods. A convenient method comprises blending of the two components at an elevated temperature, preferably not more than about 200 degrees Centigrade to keep the asphalt heating costs down and to prevent adverse temperature effects.

**EXAMPLES 1- 5, Comparative Example A (Preparation of PMB blends)**

Polymer Modified Bitumen blends were prepared with a Silverson L4R high shear mixer. The bitumen was heated to 160°C and subsequently the polymer(s) added. During polymer addition and disintegration the temperature increased to 180°C, which is caused by the energy input of the mixer. At 180°C the temperature was kept constant by on/off switching of the high shear mixer. Blending was continued until a homogeneous blend was obtained which was monitored by fluorescence microscopy.

The polymer composition that has been used in the Examples is a linear high mol weight styrene-butadiene-styrene coupled block copolymer (SBC1) with a large amount of diblock, acting as elastomer, with the following characteristics:
1. styrene content of about 30% by weight;
2. diblock molecular weight of about 200,000;
3. diblock content of 80% by weight;
4. having a linear structure (manufactured with a difunctional coupling agent), and
5. having an apparent molecular weight (SBS) of about 36000 - 328000 - 36000. This composition is referred to as Polymer A.

In Examples 1 to 3, a modification level of 12% polymer on bitumen was evaluated in various types of bitumen. In Comparative Example A instead KRATON® D1186 has been used, a commercial clear branched styrenic block copolymer, based on styrene and butadiene and having a styrene content of about 30%. The bitumen used in the Examples are the following:
- B-85 bitumen: a PEN 85 bitumen with an asphaltenes/saturates/aromatics/resins content of about 12/11.5/55/21.5 %wt
- B-180 bitumen: a PEN 180 bitumen with an asphaltenes/saturates/aromatics/resins content of about 12/14/52/22 %wt
- PX200 bitumen: a propane bitumen containing bright furfural extract with a PEN of about 200 and an asphaltenes/saturates/aromatics/resins content of about 6/5.5/66.5/22 %wt

**Preparation of samples for flow and cold-bending analyses**

A certain quantity of PMB is poured into a spacer with defined dimensions (15 cm x 23 cm x 0.15 cm) including glass-fibre as a carrier. Covered with silicon paper the sample is placed in a Pasadena hydraulic press and pressed for 5 minutes with a load of 15000 Pounds at 150°C. After a cooling period of 10 minutes a 2^{nd} spacer is placed on the other side of the carrier and the procedure as described above is repeated. The roofing sheet thus created is cut from its spacers and test specimen can be cut for flow and cold-bending analyses.

**Rheological properties tested**

The bituminous blends were tested according to the following methods:

| | |
|---|---|
| Softening point | ASTM D36, corrected for stirring with +1.5°C |
| R&B | |
| Cold bend | UEAtc M.O.A.T. no.31:1984 |
| Flow resistance | DIN 52123 Aug.1985 |
| Blend viscosity at | British Standard EN 13702-2 |
| 180°C | |
| Gelation | Described below |
| Tendency | |
| Artificial ageing | 3 months at 70°C in an air ventilated oven |

**Gelation tendency**

In a modified Haake Rotoviscometer 50 grams of the ready-made blend is stirred with an anchor shaped stirrer at a rotation speed of 300 rpm at 200°C while a constant flow of air of 20 NI/hr is blown on the surface of the sample. The stirrer is directly attached to the measuring device of the Haake viscometer, such that an increase in the sample's viscosity, indicative of the onset of gelation, is recorded as an increase in the Haake's torque signal. This torque signal is a measure for the sample's viscosity and is monitored until a sudden steep torque increase indicates that the relative viscosity increases sharply. The number of hours after which this steep viscosity increase occurs is a measure for the blend's gelation tendency.

**Table 1 Rheological properties of 12% PMB**

| **Example** | **Ex.1** | **Ex.2** | **Ex.3** | **CEx.A** |
|---|---|---|---|---|
| Bitumen | B85 | PX200 | B180 | B180 |
| Polymer | A | A | A | D1186 |
| Softening point R&B, °C | 127 | 125 | 126 | 125 |
| Penetration at 25°C, dmm | 56 | 86 | 90 | 44 |
| Viscosity at 180°C, mPa.s | | | | |
| Shear rate @ 20 s⁻¹ | 3600 | 4860 | 2340 | 1860 |
| Shear rate @ 100 s⁻¹ | 2600 | 3120 | 1840 | 1380 |
| Cold bend , pass °C | -25 | -35 | -40 | -30 |
| DIN flow, pass °C | 110 | 110 | 110 | 100 |
| Service T-range, °C | 135 | 145 | 150 | 130 |
| Time to Gelation at 200°C, hr | n.d. | n.d. | 77 | 48 |

With the blend of Polymer A in the hard B85 bitumen, the performance is especially suited for hot climate conditions.

**Table 2, Evaluations varying composition in B180 bitumen**

| Example | Ex.3 | Ex.4 | Ex.5 |
|---|---|---|---|
| Bitumen | B180 | B180 | B180 |
| Polymer | A | A | A |
| Polymer content, %wt | 12 | 10 | 10 |
| Sulphur, %wt | - | - | 0.1 |
| Softening point R&B, °C | 126 | 113 | 125 |
| Penetration at 25°C, dmm | 90 | 89 | 77 |
| Viscosity at 180°C, mPa.s | | | |
| Shear rate @ 20 s⁻¹ | 2340 | 1630 | 1820 |
| Shear rate @ 100 s -1 | 1840 | 1120 | 1240 |
| Cold bend , pass °C | -40 | -25 | -20 |
| DIN flow, pass °C | 110 | 105 | 110 |
| Service T-range, °C | 150 | 130 | 130 |

The results with the blend with 10% Polymer A in B180 bitumen show the advantage and strength of the new polymer composition. Even with a lower modification level, the high temperature resistance is maintained while with the combination of results obtained, I.e., soft compound, low viscosity and high flow resistance, the claimed polymer is especially suited in bitumen as easy welding compound. The presence of sulphur as cross-linking agent increases the softening point and results in a harder bitumen, as expected.

The blending stability of Polymer A in PX200 and B180 bitumen are presented in Table 3, while the results with D1186 in both types of bitumen are also given for comparison reasons.

The profiles confirm the observations that improved blending (hot storage) stability is obtained with Polymer A in bitumen in comparison with that found for the standard D1186.

**Table 3, Blending stability (R&B vs. time) of Polymer A in PX200 and B180 bitumen**

| **Polymer:** | **A** | **D1186** | **A** | **D1186** |
|---|---|---|---|---|
| Bitumen: | B180 | B180 | PX200 | PX200 |
| R&B (°C) after blending t= 0 hr | 125 | 124 | 125 | 122 |
| R&B (°C) after blending t= 24 hr | 127 | 121 | 124 | 118 |
| R&B (°C) after blending t= 24 hr | 126 | 120 | 124 | 116 |
| R&B (°C) after blending t= 72 hr | 128 | 120 | 120 | 116 |

CONCLUSIONS

From the initial screening and contour study it can be concluded that with polymer compositions as claimed, the visco-elastic properties are maintained even at high Elastomer (e.g., diblock) levels, resulting in surprisingly good service temperature range performances, while one benefits low blend viscosities and improved blending (hot storage) stability.

PolymerA in B180 bitumen shows an improved service temperature range and resistance to gelation in comparison with that of the blend with a standard radial SBS, high coupled KRATON® D1186. With Polymer A incorporated a softer compound is obtained, however, combined with a good high temperature flow resistance. The latter phenomenon can be attributed to the pseudo-plastic behaviour of the polymer.

Polymer A, in comparison with standard SBS, excels in the following properties, justifying the use of Polymer A in specific roofing application:
- Wide service temperature range (Δ cold bend and flow resistance).
- Soft compound (high penetration value) in combination with good high temperature flow resistance (pseudo-plastic behaviour).
- Improved hot storage and resistance to gelation.

### Technical Field

This invention relates to a bituminous roofing composition which comprises a block copolymer and a bituminous material. More particularly, this invention relates to an easy welding roll roofing composition comprising a styrenic block copolymer which assists in enhancing the composition's resistance to heat at roof top temperatures while at the same time enhancing flow at welding temperatures.

## Claims

1. A bituminous roofing composition which comprises from 2 to 20 percent by weight, based on block copolymer plus bitumen, of a styrenic block copolymer composition, the balance being a bituminous material, wherein the styrenic block copolymer composition comprises:
a. from 5 to 70% by weight of a first block copolymer selected from linear styrenic block copolymers (SBC1), radial styrenic block copolymers (SBC2) and mixtures thereof, wherein:
i. said linear block copolymer comprises at least two polymer blocks each substantially made of an aromatic vinyl compound and at least one polymer block substantially made of a conjugated diene compound and having an apparent molecular weight greater than 250,000 and;
ii. said radial styrenic block copolymer has three or more polymer arms attached to the residue of a cross-linking agent or multifunctional compound, and comprises at least two polymer blocks each substantially made of an aromatic vinyl compound and at least one polymer block substantially made of a conjugated diene compound and wherein the polymer arms have an average apparent molecular weight greater than 125,000 and
b. from 95 to 30% by weight of an elastomer (EI) having an apparent molecular weight of 120,000 to 250,000.

2. The composition of claim 1, comprising from 5 to 15, preferably from 8 to 14 percent, based on block copolymer and bitumen of the styrenic block copolymer composition.

3. The composition of claim 1, wherein the styrenic block copolymer constituents are selected from the group consisting of
A-B-A-(B)ₚ or (A-B)₂X
wherein A represents the polymer block substantially made of an aromatic vinyl compound, typically a polystyrene block; B a represents the polymer block substantially made of a conjugated diene, typically a polybutadiene block, p is 0 or 1 and X is the residue of a coupling agent.

4. The composition of claim 1, wherein the styrenic block copolymer and elastomer are used in relative amounts of 10 to 50% by weight (SBC1 and/or SBC2) and 80 to 50% by weight (E1).

5. The composition of claim 1, containing from 0 to 65 percent by weight of a filler based on the total composition.

6. The composition of claim 1, containing from 0.05 to 0.2 wt % of a cross-linking agent, based on the total bituminous composition (prior to filing with a filler).

7. The composition of claim 1, containing one or more tackifying resins in an amount of from 0 to 25 weight percent of the total bituminous composition (prior to filing with a filler).

8. A easy welding roll roofing membrane which comprises a reinforcing mat and the bituminous composition of claim 1 which saturates and/or coats the reinforcing mat.
